# EUROPEAN PATENT SPECIFICATION

(11) **EP 3 803 185 B1**
(45) Date of publication and mention of the grant of the patent: **10.05.2023**
(21) Application number: 19730443.9
(22) Date of filing: 29.05.2019
(51) Int. Cl.: F16L 58/16, F16L 57/06, C09J 7/40

(54) **A PROTECTIVE FILM**
EINE SCHUTZFOLIE
UN FILM DE PROTECTION

(30) Priority: 01.06.2018 GB 201809026
(43) Date of publication of application: 14.04.2021
(73) Proprietor: Winn & Coales International Limited, London SE27 0TR (GB)
(72) Inventor: DUNSTERVILLE, Brian, London Greater London SE27 0TR (GB)
(74) Representative: Boult Wade Tennant LLP
(86) International application number: PCT/GB2019/051461
(87) International publication number: WO 2019/229429

(56) References cited:
- CN-U- 205 368 227
- CN-U- 207 347 475
- JP-A- 2013 127 582
- TW-U- M 551 598
- US-A1- 2013 228 267
- US-A1- 2014 106 133

## Description

The present invention relates to an adhesive protective film for protecting objects, in particular pipework. It is generally known in the art to use a protective film in order to protect pipework against corrosion, abrasion, and other potentially damaging actions.

Such protective films are generally provided as a protection layer which is supplied on a release layer. The release layer allows the protective film to be formed into a roll for transport and storage without the protection layer sticking to itself. In use, the protection layer is peeled from the release layer and applied to the surface to be protected. The excess release layer is then cut from the roll of material and disposed of.

Such cutting either requires cutting tools and hence increases the complexity of the process or alternatively requires a thinner release layer which can be torn by hand but which will necessarily not protect the protective film as well as a thicker, non-tearable, release layer.

JP 2013127582 A discloses an acoustic insulation fixing tape.

US 2015/204476 A1 discloses a unidirectional fiber composite system for structural repairs and reinforcements.

US 2013/228267 A1 discloses a double-sided pressure-sensitive adhesive tape and method for attaching the same. The double-sided pressure-sensitive adhesive tape includes, on at least one side of a pressure-sensitive adhesive body, a release liner having a notch and/or slit in at least one edge in the width direction. A thickness of the release liner is, for example, preferably from 20 to 300 µm. A pressure-sensitive adhesive body in the double-sided pressure-sensitive adhesive tape can include a base layer. A thickness of the base layer is, for example, generally 1000 µm or less.

CN 204474576 U discloses an adhesive tape.

CN 207347475 U discloses a multi-functional electromagnetic shield sticky tape.

CN 106494934 A discloses an adhesive tape with notches.

CN 205368227 U discloses a double-side adhesive tape.

US 2014/106133 A1 discloses a laminate having a support, a resin sheet that is laminated on a part of the support, and a release sheet that is laminated on the resin sheet.

TW M 551 598 U discloses a tape including a tape substrate having a first side and a second side coated with an adhesive layer and a release layer respectively.

Accordingly, it is desirable to provide an improved adhesive protective film and/or to tackle at least some of the problems associated with the prior art or, at least, to provide a commercially viable alternative thereto.

An adhesive protective film according to the present invention is provided according to claim 1.

The present invention will now be further described. In the following passages different aspects of the invention are defined in more detail.

The failure initiation locations allow easy tearing of the release layer despite its increased thickness when compared to conventional release layers. As tear resistance is typically a function of the thickness of a layer, the increased thickness would typically result in an increased tear resistance but for the failure initiation locations. This enhances the ease of use of the protective film during application as well as allowing a thicker release layer which is more rigid than a thinner layer for enhanced protection during transport and storage. In particular, the enhanced rigidity may prevent the protection layer from being crushed by the weight of the roll in storage and transportation when orientated with its longitudinal axis upright. The rigidity may also help maintain the flatness of the protection layer to control and/or prevent unsightly wrinkling of the protection layer during manufacture.

The protective film may further comprise a second plurality of uniformly spaced failure initiation locations provided along the first edge of the release layer, each of the second plurality of uniformly spaced failure initiation locations being adjacent to a corresponding one of the first plurality of uniformly spaced failure initiation locations. This provides a regularly repeating set of failure points for any desired length of release layer to be torn off.

The release layer is at least 50 µm thick. This provides a reasurring thickness and support to the rolled film. This is thicker than a standard release film where such a thickness would cause difficulties in ripping the film during use. Preferably the release layer is from 50 µm to 200 µm, preferably 75 to 125 µm.

The film may be substantially rectangular with the release layer defining its outer boundaries and the first edge forming one of the long edges of the rectangle, such that the film can be formed into a roll with the first edge generally perpendicular in the longitudinal direction of the roll. The roll is a particularly convenient way for transporting large amounts of the protective film.

The failure initiation locations may be only provided on the first edge. Having the failure initiation locations provided only on the first edge means that, when the film is made into the roll, there is a bottom edge with no failure initiation locations which can be handled easily by a person transporting it without the need for protective gloves or the like. The failure initiation locations may be relatively sharp and could damage an installer's hand.

The release layer may be a polyester, preferably polyethylene terephthalate (PET). Polyesters, in particular polyethylene terephthalate, provide the desired protection characteristics for the protection layer. Alternatively, the release layer may be polyethylene. Suitable materials are well known in the art for each of the three layers forming the film. However, the release layer is provided with a greater thickness than standard.

The term, *"polyethylene"* as used herein, refers to a polymer that comprises, in polymerized form, a majority amount of ethylene monomer (based on the weight of the polymer), and optionally may comprise one or more comonomers. Similarly, PET may contain minor amounts of other monomer units.

Each failure initiation location may be formed as a symmetrical notch in the release layer. Providing the failure initiation locations as symmetrical notches helps to ensure that the tear begins in a direction perpendicular to the first edge for a generally straight tear.

Preferably each failure initiation location has a triangular wave profile forming the notch. A triangular wave profile is easy to produce and results in the desired symmetrical notch.

The amplitude of the triangular wave profile may be between 1 and 3 mm, preferably 2 mm. The triangular wave profile may be between 5 and 7 mm, preferably 6 mm. These particular dimensions produce a series of notches which are particularly suitable for initiating tearing.

Each failure initiation location may further comprise a slit cut into the release layer at an apex of the notch. The slit in the release layers encourages initiation of tearing at the given point.

The adhesive covers substantially all of the protection layer; and the release layer extends beyond the protection layer such that the first edge of the release layer is spaced from a first edge of protection layer for initiating tear in the release layer before the protection layer. Preferably the first edge of the release layer is spaced from the first edge of the protection layer by at least 5 mm.

The protection layer has a thickness of between 100 and 1000 µm; and the adhesive has a thickness of between 500 and 1500 µm. The protection layer may have a thickness of between 200 to 400 µm, and/or the adhesive may have a thickness of between 800 to 1200 µm.

The adhesive is able to be bonded more strongly to the protection layer than the release layer. This allows the protection layer and adhesive to detach from the release layer for further application to the pipework.

A method according to the present invention is provided in accordance with claim 14.

Such a method allows the benefits to be discussed above with the respect to the product to be achieved.

Preferably the method further comprises: peeling a second length of the release layer of the protective film from the adhesive and protection layer; applying the second length of adhesive and protection layer of the protective film to the surface; and applying a force at or near to a further point of weakness of the release layer to tear the release layer and remove the second length of release layer.

The present invention will now be described with respect to the Figures in which:
Figure 1 shows a schematic view of a protective release film according to the present invention;
Figure 2 shows an alternative example of a protective film;
Figure 3 shows an alternative example of the protective film of Figure 1; and
Figure 4 shows an example roll of the protective film of the present invention.

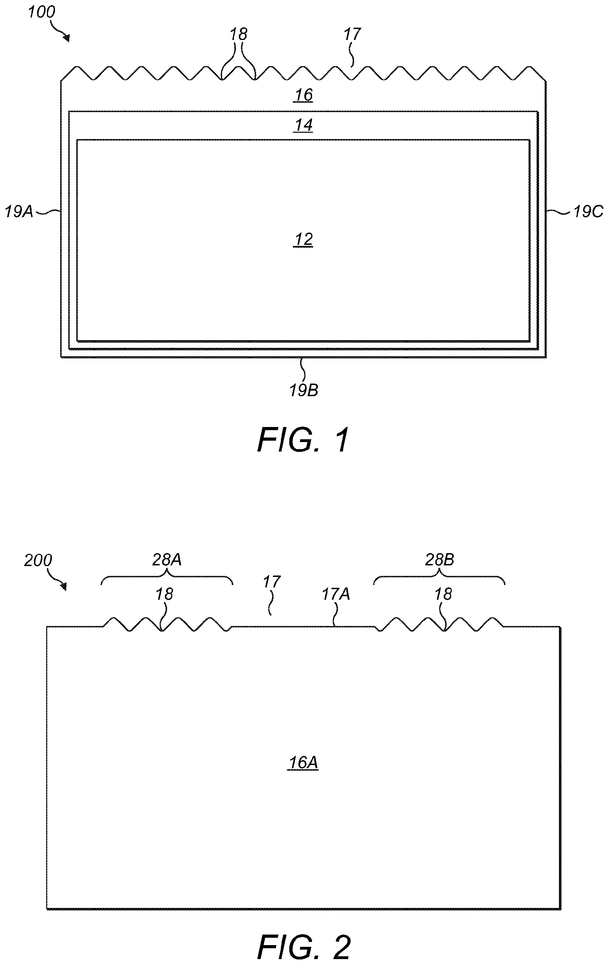

Figure 1 shows a protective film 100 according to the present invention. The protective film 100 is formed of a protection layer 14 an adhesive 12 and a release layer 16. The adhesive 12 is provided between the protection layer 14 and release layer 16. The release layer 16 is generally stronger than the other two layers and protects these two layers, particularly in transit.

The release layer 16 is provided with a plurality of failure initiation locations 18. Only two of these are provided with reference numerals in Figure 1 for brevity. However, as can be appreciated from this Figure these failure initiation locations 18 extend along the length of a first edge 17 of the release layer 16. Each failure initiation location 18 is evenly spaced from an adjacent failure initiation location 18. In particular, in the embodiment of Figure 1 each failure initiation location 18 is provided as a symmetrical notch in the first edge 17 of the release layer 16. These symmetrical notches are formed with a triangular wave profile as shown in Figure 1. The triangular wave profile has an aptitude of between 1 and 3 mm and, preferably 2 mm. The triangle wave profile further has a wavelength of between 5 and 7 mm, preferably 6 mm. Each of these failure initiation locations 18 enhances the ease of tearing the release layer 16.

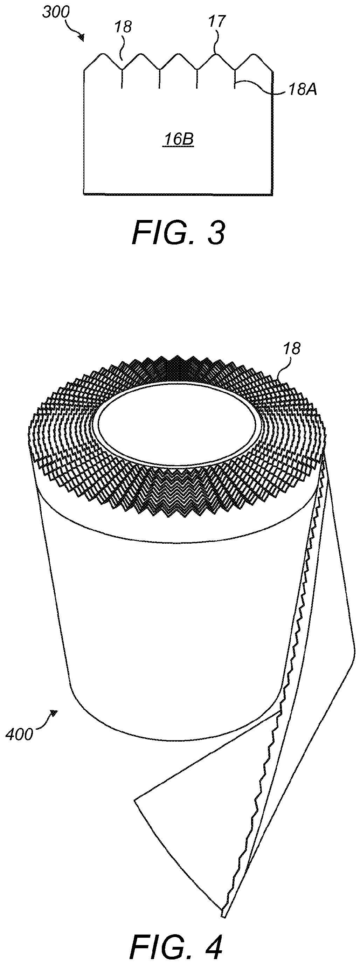

In the depicted embodiment these failure initiation locations 18 are only provided along the first edge 17 of the release layer 16 and not on any of the remaining edges 19A, 19B, 19C. The release layer 16 is generally rectangular in shape and, as such, can be readily rolled into a cylindrical roll 400 as depicted in Figure 4 with the failure initiation locations 18 (only one indicated in Figure 4) provided on one edge of the roll 400.

In use, the release layer 16 is processively peeled from the adhesive 12 and protection layer 14 to expose the adhesive 12 which is sandwiched between the other two layers. The adhesive 12 is more strongly bonded to the protection layer 14 than to the release layer 16 and as such is retained by the protection layer 14 when the release layer 16 is removed. The protection layer 14 and adhesive 12 are then applied to a surface which is to be protected by the protection layer 14. In particular, the present invention is envisioned to be used to protect pipework. In this case, the adhesive 12 and protection layer 14 will be applied to the pipework such that the adhesive 12 bonds the protection layer 14 to the pipework. The protection layer 14 then forms an outer surface of the pipework and protects it from damage.

As the protection layer 14 and adhesive 12 are applied to the surface a build-up of spent release layer 16 will be formed as the other layers are removed therefrom. Once the application is complete, or when the excess of release layer 16 becomes too unwieldy, the installer initiates a tear in the release layer 16 at one of the failure initiation locations 18. This tear is then propagated across the rest of the release layer 16 to detach the excess spent release layer 16 from the protective film 100. This allows the excess release layer 16 to be easily removed and disposed of either at completion of application, or when it is getting in the way.

By providing the failure initiation locations 18 in the release layer 16, the release layer 16 can be made thicker than traditional release layers. In particular, the release layer 16 is at least 50 µm thick. Such a thick release layer would not be readily tearable without the use of additional tools but for the failure initiation locations 18. As such, the thicker release layer 16 provides enhanced protection to the protection layer 14 underneath.

Figure 2 depicts an alternative arrangement of failure initiation locations 18 on a release layer 16A. The adhesive 12 and protection layer 14 have been omitted from Figure 2 as they are generally identical to those shown in Figure 1. Each failure initiation location 18 is generally formed as in the embodiment of Figure 1. However, in this embodiment a portion 17A of the first edge 17 is provided between first and second sets 28A, 28B of failure initiation locations 18. The portion 17A of the first edge 17 between these regions 28A, 28B is provided without any failure initiation locations 18. In certain examples, this portion 17A may be approximately 1 metre long to allow for discrete 1 metre strips of release layer 16A to be removed.

Figure 3 shows a close-up of the failure initiation locations 18 of a further release layer 16B. Again, the adhesive 12 and protection layer 14 have been omitted from this Figure as they are generally identical to Figure 1. Each of the failure initiation locations 18 is further provided with a notch 18A in the release layer 16B. The notch 18A may be formed as a slit which encourages propagation of the tear in a direction generally perpendicular to the first edge 17.

Each of the embodiments described above achieves the advantages set out in the statement of invention with respect to an easier application and the ability to use a thicker release layer than would traditionally be applied.

## Claims

1. An adhesive (12) protective film (100) for protecting pipework, the film comprising:
a protection layer (14);
a release layer (16); and
an adhesive (12) between the protection layer (14) and the release layer (16), wherein:
the release layer (16) comprises a first plurality of uniformly spaced failure initiation locations (18) provided along a first edge (17) of the release layer (16) for initiating tearing of the protective film (100);
the release layer (16) is at least 50 µm thick;
the adhesive (12) covers substantially all of the protection layer (14); and
the release layer (16) extends beyond the protection layer (14) such that the first edge (17) of the release layer (16) is spaced from a first edge of the protection layer (14) for initiating tear in the release layer (16) before the protection layer (14);
the protection layer (14) has a thickness of between 100 and 1000 µm; and
the adhesive (12) has a thickness of between 500 and 1500 µm.

2. The protective film (100) of claim 1, comprising a second plurality of uniformly spaced failure initiation locations (18) provided along the first edge (17) of the release layer (16), each of the second plurality of uniformly spaced failure initiation locations (18) being adjacent to a corresponding one of the first plurality of uniformly spaced failure initiation locations (18).

3. The protective film (100) of any preceding claim, wherein the protective film (100) is substantially rectangular with the release layer (16) defining its outer boundaries and the first edge (17) of the release layer (16) forms one of the long edges of the rectangle, such that the protective film (100) can be formed into a roll with the first edge (17) generally perpendicular in the longitudinal direction of the roll.

4. The protective film (100) of claim 3, wherein the failure initiation locations (18) are only provided on the first edge (17) of the release layer (16).

5. The protective film (100) of any preceding claim, wherein the release layer (16) is a polyester, preferably polyethylene terephthalate (PET).

6. The protective film (100) of any preceding claim, wherein each failure initiation location (18) is formed as a symmetrical notch (18A) in the release layer (16).

7. The protective film (100) of claim 6, wherein each failure initiation location (18) has a triangular wave profile forming the notch (18A).

8. The protective film (100) of claim 7, wherein the amplitude of the triangular wave profile is between 1 and 3 mm, preferably 2 mm.

9. The protective film (100) of claim 6 or 7, wherein the wavelength of the triangular wave profile is between 5 and 7 mm, preferably 6 mm.

10. The protective film (100) of any of claims 6 to 9, wherein each failure initiation location (18) further comprises a slit cut into the release layer (16) at an apex of the notch (18A).

11. The protective film (100) of any preceding claim, wherein the first edge (17) of the release layer (16) is spaced from the first edge (17) of the protection layer (14) by at least 5 mm.

12. The protective film (100) of any preceding claim, wherein the adhesive (12) is bonded more strongly to the protection layer (14) than the release layer (16).

13. A method of applying one or more layers of the protective film (100) of claim 1 to a surface, the method comprising the steps of:
peeling a first length of the release layer (16) off the protective film (100) from the adhesive (12) and protection layer (14);
applying the first length of adhesive (12) and protection layer (14) of the protective film (100) to a surface;
applying a force at or near to one of the failure initiation locations (18) of the release layer (16) to tear the release layer (16) and remove the first length of release layer (16).

14. The method of claim 13, further comprising the steps of:
peeling a second length of the release layer (16) of the protective film (100) from the adhesive (12) and protection layer (14);
applying the second length of adhesive (12) and protection layer (14) of the protective film (100) to the surface; and
applying a force at or near to a further one of the failure initiation locations (18) of the release layer (16) to tear the release layer (16) and remove the second length of release layer (16).

## Patentansprüche

1. Haftmittel (12)-Schutzfilm (100) zum Schützen einer Verrohrung, der Film umfassend:
eine Schutzschicht (14);
eine Löseschicht (16); und
ein Haftmittel (12) zwischen der Schutzschicht (14) und der Löseschicht (16),
wobei:
die Löseschicht (16) eine erste Mehrzahl von gleichmäßig beabstandeten Fehler-Auslösepositionen (18) umfasst, welche entlang eines ersten Rands (17) der Löseschicht (16) bereitgestellt sind, um ein Reißen des Schutzfilms (100) auszulösen;
die Löseschicht (16) wenigstens 50 µm dick ist;
das Haftmittel (12) im Wesentlichen die gesamte Schutzschicht (14) bedeckt; und sich die Löseschicht (16) über die Schutzschicht (14) hinaus derart erstreckt, das der erste Rand (17) der Löseschicht (16) von einem ersten Rand der Schutzschicht (14) beabstandet ist, um ein Reißen in der Löseschicht (16) vor der Schutzschicht (14) auszulösen;
die Schutzschicht (14) eine Dicke von zwischen 100 und 1000 µm aufweist; und
das Haftmittel (12) eine Dicke von zwischen 500 und 1500 µm aufweist.

2. Schutzfilm (100) nach Anspruch 1, umfassend eine zweite Mehrzahl von gleichmäßig beabstandeten Fehler-Auslösepositionen (18), welche entlang des ersten Rands (17) der Löseschicht (16) bereitgestellt sind, wobei jede aus der zweiten Mehrzahl von gleichmäßig beabstandeten Fehler-Auslösepositionen (18) benachbart zu einer entsprechenden aus der ersten Mehrzahl von gleichmäßig beabstandeten Fehler-Auslösepositionen (18) ist.

3. Schutzfilm (100) nach einem vorhergehenden Anspruch, wobei der Schutzfilm (100) im Wesentlichen rechteckig ist, wobei die Löseschicht (16) seine äußeren Begrenzungen definiert und der erste Rand (17) der Löseschicht (16) einen der langen Ränder des Rechtecks bildet, so dass der Schutzfilm (100) in eine Rolle gebildet werden kann, mit dem ersten Rand (17) im Wesentlichen senkrecht in der longitudinalen Richtung der Rolle.

4. Schutzfilm (100) nach Anspruch 3, wobei die Fehler-Auslösepositionen (18) lediglich an dem ersten Rand (17) der Löseschicht (16) bereitgestellt sind.

5. Schutzfilm (100) nach einem vorhergehenden Anspruch, wobei die Löseschicht (16) ein Polyester ist, vorzugsweise Polyethylen-Terephthalat (PET).

6. Schutzfilm (100) nach einem vorhergehenden Anspruch, wobei jede Fehler-Auslöseposition (18) als eine symmetrische Kerbe (18A) in der Löseschicht (16) gebildet ist.

7. Schutzfilm (100) nach Anspruch 6, wobei jede Fehler-Auslöseposition (18) ein dreieckiges Wellenprofil aufweist, welches die Kerbe (18A) bildet.

8. Schutzfilm (100) nach Anspruch 7, wobei die Amplitude des dreieckigen Wellenprofils zwischen 1 und 3 mm beträgt, vorzugsweise 2 mm.

9. Schutzfilm (100) nach Anspruch 6 oder 7, wobei die Wellenlänge des dreieckigen Wellenprofils zwischen 5 und 7 mm beträgt, vorzugsweise 6 mm.

10. Schutzfilm (100) nach einem der Ansprüche 6 bis 9, wobei jede Fehler-Auslöseposition (18) ferner einen Schlitz umfasst, welcher in die Löseschicht (16) an einem Scheitel der Kerbe (18A) geschnitten ist.

11. Schutzfilm (100) nach einem vorhergehenden Anspruch, wobei der erste Rand (17) der Löseschicht (16) von dem ersten Rand (17) der Schutzschicht (14) um wenigstens 5 mm beabstandet ist.

12. Schutzfilm (100) nach einem beliebigen Anspruch, wobei das Haftmittel (12) stärker an die Schutzschicht (14) als an die Löseschicht (16) gebunden ist.

13. Verfahren zum Aufbringen von einer oder mehreren Lagen des Schutzfilms (100) nach Anspruch 1 auf eine Oberfläche, das Verfahren umfassend die Schritte:
Abschälen einer ersten Länge der Löseschicht (16) von dem Schutzfilm (100) von dem Haftmittel (12) und der Schutzschicht (14);
Aufbringen der ersten Länge von Haftmittel (12) und Schutzschicht (14) des Schutzfilms (100) auf eine Oberfläche;
Aufbringen einer Kraft an oder in der Nähe von einer der Fehler-Auslösepositionen (18) der Löseschicht (16), um die Löseschicht (16) zu reißen und die erste Länge der Freigabeschicht (16) zu entfernen.

14. Verfahren nach Anspruch 13, ferner umfassend die Schritte:
Abschälen einer zweiten Länge der Löseschicht (16) des Schutzfilms (100) von dem Haftmittel (12) und der Schutzschicht (14);
Aufbringen der zweiten Länge von Haftmittel (12) und Schutzschicht (14) des Schutzfilms (100) auf die Oberfläche; und
Aufbringen einer Kraft an oder in der Nähe von einer weiteren der Fehler-Auslösepositionen (18) der Löseschicht (16), um die Löseschicht (16) zu reißen und die zweite Länge der Freigabeschicht (16) zu entfernen.

## Revendications

1. Film de protection (100) d'adhésif (12) pour protéger une tuyauterie, le film comprenant :
une couche de protection (14) ;
une couche de séparation (16) ; et
un adhésif (12) entre la couche de protection (14) et la couche de séparation (16), dans lequel :
la couche de séparation (16) comprend une première pluralité d'emplacements d'initiation de défaillance uniformément espacés (18) prévus le long d'un premier bord (17) de la couche de séparation (16) pour initier une déchirure du film de protection (100) ;
la couche de séparation (16) présente une épaisseur d'au moins 50 µm ;
l'adhésif (12) couvre sensiblement la totalité de la couche de protection (14) ; et
la couche de séparation (16) s'étend au-delà de la couche de protection (14) de telle sorte que le premier bord (17) de la couche de séparation (16) est espacé d'un premier bord de la couche de protection (14) pour initier une déchirure dans la couche de séparation (16) avant la couche de protection (14) ;
la couche de protection (14) présente une épaisseur comprise entre 100 et 1 000 µm ; et
l'adhésif (12) présente une longueur comprise entre 500 et 1 500 µm.

2. Film de protection (100) selon la revendication 1, comprenant une seconde pluralité d'emplacements d'initiation de défaillance uniformément espacés (18) prévus le long du premier bord (17) de la couche de séparation (16), chacun de la seconde pluralité d'emplacements d'initiation de défaillance uniformément espacés (18) étant adjacent à un emplacement correspondant de la première pluralité d'emplacements d'initiation de défaillance uniformément espacés (18).

3. Film de protection (100) selon l'une quelconque des revendications précédentes, dans lequel le film de protection (100) est sensiblement rectangulaire, la couche de séparation (16) définissant ses limites extérieures, et le premier bord (17) de la couche de séparation (16) forme l'un des longs bords du rectangle, de sorte que le film de protection (100) peut être formé en un rouleau, le premier bord (17) étant généralement perpendiculaire à la direction longitudinale du rouleau.

4. Film de protection (100) selon la revendication 3, dans lequel les emplacements d'initiation de défaillance (18) sont uniquement prévus sur le premier bord (17) de la couche de séparation (16).

5. Film de protection (100) selon l'une quelconque des revendications précédentes, dans lequel la couche de séparation (16) est un polyester, de préférence du poly(téréphtalate d'éthylène).

6. Film de protection (100) selon l'une quelconque des revendications précédentes, dans lequel chaque emplacement d'initiation de défaillance (18) est formé sous la forme d'une encoche symétrique (18A) dans la couche de séparation (16).

7. Film de protection (100) selon la revendication 6, dans lequel chaque emplacement d'initiation de défaillance (18) présente un profil d'onde triangulaire formant l'encoche (18A).

8. Film de protection (100) selon la revendication 7, dans lequel l'amplitude du profil d'onde triangulaire est comprise entre 1 et 3 mm, de préférence de 2 mm.

9. Film de protection (100) selon la revendication 6 ou 7, dans lequel la longueur d'onde du profil d'onde triangulaire est comprise entre 5 et 7 mm, de préférence de 6 mm.

10. Film de protection (100) selon l'une quelconque des revendications 6 à 9, dans lequel chaque emplacement d'initiation de défaillance (18) comprend en outre une fente découpée dans la couche de séparation (16) au niveau d'un sommet de l'encoche (18A).

11. Film de protection (100) selon l'une quelconque des revendications précédentes, dans lequel le premier bord (17) de la couche de séparation (16) est espacé du premier bord (17) de la couche de protection (14) d'au moins 5 mm.

12. Film de protection (100) selon l'une quelconque des revendications précédentes, dans lequel l'adhésif (12) est lié plus fortement à la couche de protection (14) que la couche de séparation (16).

13. Procédé d'application d'une ou plusieurs couches du film de protection (100) selon la revendication 1 sur une surface, le procédé comprenant les étapes consistant à :
enlever par pelage une première longueur de la couche de séparation (16) hors du film de protection (100) à partir de l'adhésif (12) et de la couche de protection (14) ;
appliquer la première longueur d'adhésif (12) et de la couche de protection (14) du film de protection (100) sur une surface ;
appliquer une force au niveau ou à proximité de l'un des emplacements d'initiation de défaillance (18) de la couche de séparation (16) pour déchirer la couche de séparation (16) et retirer la première longueur de couche de séparation (16).

14. Procédé selon la revendication 13, comprenant en outre les étapes consistant à :
enlever par pelage une seconde longueur de la couche de séparation (16) du film de protection (100) à partir de l'adhésif (12) et de la couche de protection (14) ;
appliquer la seconde longueur d'adhésif (12) et de la couche de protection (14) du film de protection (100) sur la surface ; et
appliquer une force au niveau ou à proximité d'un autre des emplacements d'initiation de défaillance (18) de la couche de séparation (16) pour déchirer la couche de séparation (16) et retirer la seconde longueur de couche de séparation (16).
